Europäisches Patentamt

European Patent Office

Office européen des brevets

(19)

(11) Numéro de publication: **0 178 984**

**A1**

(12) ## DEMANDE DE BREVET EUROPEEN

(21) Numéro de dépôt: 85401901.5

(22) Date de dépôt: 30.09.85

(51) Int. Cl.⁴: **C 03 C 3/11**
C 03 C 3/095, G 21 F 1/06

(30) Priorité: 02.10.84 FR 8415103

(43) Date de publication de la demande:
23.04.86 Bulletin 86/17

(84) Etats contractants désignés:
DE FR GB

(71) Demandeur: CENTRE NATIONAL DE LA RECHERCHE
SCIENTIFIQUE (C.N.R.S.)
15, Quai Anatole France
F-75007 Paris(FR)

(72) Inventeur: Laurent, Yves
Les Landes de Billé Thorigné-Fouillard
F-35510 Cesson-Sevigne(FR)

(72) Inventeur: Verdier, Patrick
La Perlais
F-35690 Acigne(FR)

(74) Mandataire: Ahner, Francis et al,
CABINET REGIMBEAU 26, avenue Kléber
F-75116 Paris(FR)

(54) Verres neutrophages au gadolinium et leur procédé de préparation.

(57) La présente invention concerne des verres neutrophages au gadolinium et leur procédé de préparation.
Les verres selon l'invention comprenant du silicium, de l'aluminium, de l'oxygène et/ou de l'azote, se caractérisent en ce qu'ils contiennent en outre du gadolinium à raison d'environ 5 à 15% atomique.

EP 0 178 984 A1

Croydon Printing Company Ltd

VERRES NEUTROPHAGES AU GADOLINIUM ET LEUR PROCEDE DE PREPARATION

La présente invention concerne des verres neutrophages oxygénés et oxyazotés comportant du gadolinium à raison d'environ 5 à 15% atomique, ainsi que leur fabrication.

Le gadolinium possède des propriétés neutrophages très puissantes. On peut ainsi donner pour exemple les valeurs des sections de capture pour quelques éléments (Aluminium : 0,23 ; Fer : 2,53 ; Chrome : 2,9 ; Nickel : 4,6 ; Bore : 755) que l'on peut comparer à la valeur beaucoup plus élevée pour le gadolinium : 46000.

Des études précédentes ont permis de mettre en évidence le rôle de l'azote lors de l'irradiation des nitrures par des neutrons rapides ou par des bombardements aux ions lourds. Ainsi, la section efficace de dommage est environ 500 fois plus faible que celle de la monazite, c'est-à-dire que la résistance à l'irradiation est multipliée par 500.

Les céramiques invoquées appelées "Sialons" ont été à l'origine des recherches sur les verres azotés. L'addition d'oxyde métallique nécessaire à une meilleure densification de ces matériaux conduit à la formation d'une phase vitreuse.

La substitution de l'oxygène par de l'azote tricoordiné dans un réseau vitreux provoque un double effet :

- une augmentation du caractère réfractaire, de la densité, des modules d'Young et de cisaillement, de la dureté, etc.

- une diminution de l'étendue des zones vitreuses en fonction du taux d'azote. L'azote n'est pas un agent vitrificateur (on ne connaît pas de verres totalement azotés).

L'étude des phases vitreuses azotées est récente, l'association du gadolinium à ces phases est nouvelle.

La présente invention concerne des verres neutrophages comprenant du silicium, de l'aluminium, de l'oxygène et/ou de l'azote, caractérisés en ce qu'ils comprennent en outre du gadolinium à raison d'environ 5 à 15% atomique.

En particulier, elle concerne des verres oxygénés dont la teneur en oxyde de gadolinium est de l'ordre de 10 à 30 % molaire, c'est-à-dire que dans ces verres neutrophages selon l'invention, la teneur en gadolinium est de l'ordre de $10^{22}$ atomes de gadolinium par $cm^3$.

La présente invention concerne également des verres oxyazotés dont la teneur en oxyde de gadolinium reste légèrement plus faible, de l'ordre d'environ 10 à 20% molaire.

Les verres neutrophages selon l'invention contiennent les éléments suivants dans les proportions atomiques précisées ci-après :

| | |
|---|---|
| Si | 9,5 à 20,2 % |
| Al | 5,6 à 16,0 % |
| O | 52,3 à 64,0 % |
| N | 0 à 10,0 %. |
| Gd | 5,4 à 14,7 %. |

La zone vitreuse dans le diagramme $SiO_2\text{-}Al_2O_3\text{-}Gd_2O_3$ est comprise dans la zone de composition molaire :

| $Gd_2O_3$ | 10 à 30 % |
|---|---|
| $SiO_2$ | 40 à 72 % |
| $Al_2O_3$ | 10 à 35 %. |

La zone vitreuse dans le diagramme $SiO_2$-AlN-$Gd_2O_3$ est comprise dans la zone de composition molaire :

| $SiO_2$ | 57 à 68 % |
|---|---|
| AlN | 17 à 28 % |
| $Gd_2O_3$ | 9 à 21 % |

La réalisation pratique des phases vitreuses azotées se heurte à des difficultés du fait que l'étendue de la zone vitreuse est réduite en présence d'azote.

La préparation des verres oxyazotés se fait généralement à partir de réactifs à l'état solide. Les sources d'azote nécessaires à la préparation des verres azotés sont en général $Si_3N_4$, $Si_2N_2O$, ou encore AlN. Le nitrure de silicium est moins réactif et nécessite des températures de réaction très élevées. Afin d'obtenir la zone vitreuse la plus étendue aux températures les plus basses possibles, on utilise comme source d'azote un nitrure d'aluminium particulièrement réactif, préparé par réaction d'un courant d'ammoniac à une température inférieure à environ 500°C sur de l'alumine pulvérulente porté à une température d'au moins environ 1200°. Ce procédé a fait l'objet d'une demande de brevet français déposée ce jour au nom de la demanderesse sous le n° 84 15104.

La présente invention concerne également le procédé de préparation de ces verres neutrophages, caractérisé en ce que l'on chauffe jusqu'à une température d'environ 1400°C un mélange pulvérulent comportant notamment de l'oxyde de silicium, de l'oxyde et/ou du nitrure d'aluminium et de l'oxyde de gadolinium, dans des creusets métalliques, et que l'on refroidit pour obtenir la vitrification. Par ce procédé on a obtenu des verres en particulier pour les compositions de mélanges pulvérulents suivantes :

| | |
|---|---|
| AlN | 25 % |
| $Gd_2O_3$ | 15 % |
| $SiO_2$ | 60 % |

ou

| | |
|---|---|
| AlN | 20 % |
| $Gd_2O_3$ | 15 % |
| $SiO_2$ | 65 % |

ou encore

| | |
|---|---|
| AlN | 18,2 % |
| $Al_2O_3$ | 9,1 % |
| $SiO_2$ | 54,5 % |
| $Gd_2O_3$ | 18,2 % |

On obtient encore des verres dans le diagramme quinaire Gd-Si-Al-O-N pour des teneurs en azote allant jusqu'à 10 % atomique.

A titre d'illustration, on indiquera ci-après trois autres exemples de verres selon l'invention (Tableau I), ainsi que leurs principales propriétés physiques (Tableau II).

TABLEAU I

Compositions atomiques des verres

| | % N | % Gd | % O | % Al | % Si |
|---|---|---|---|---|---|
| Verre n°1 | 0 | 9,40 | 63,8 | 7,73 | 19,07 |
| Verre n°2 | 2,54 | 9,57 | 60,78 | 7,97 | 19,14 |
| Verre n°3 | 5,15 | 9,69 | 57,70 | 8,05 | 19,41 |

TABLEAU II

Propriétés physiques des verres

|  | densité | dureté | $Tg_{(°C)}$ | $\alpha_{(°C^{-1})}$ | $E_{(GPa)}$ |
|---|---|---|---|---|---|
| Verre n°1 | 4,04 | 630 | 1090 | $5,73.10^{-6}$ | 103,8 |
| Verre n°2 | 4,08 | 700 | 1120 | $5,1.10^{-6}$ | 113,5 |
| Verre n°3 | 4,13 | 800 | 1145 | $5,0.10^{-6}$ | 122,0 |

Tg = Température de transition vitreuse

$\alpha$ = Coefficient de dilatation thermique

GPa = Module d'Young

Dans un four à haute fréquence, on dispose des creusets métalliques, par exemple en molybdène, garnis d'un mélange pulvérulent d'oxyde de silicium, d'aluminium, de gadolinium et de nitrure d'aluminium pour les verres oxyazotés. On fait monter la température à 1400°C en 5 minutes environ, on maintient cette température pendant 30 minutes environ sous atmosphère contrôlée à base d'azote, par exemple de l'azote pur ou un mélange azote/hydrogène (90/10) ou tout autre mélange gazeux réducteur à base d'azote. On refroidit les creusets garnis pour obtenir des verres, sous atmosphère contrôlée à base d'azote pendant 5 minutes au moins.

Pour les verres oxygénés, on procède de la même manière avec les mélanges pulvérulents exempts de nitrure d'aluminium. Pour la préparation de ces verres oxygénés, on peut éventuellement également opérer sous atmosphère d'azote.

La propriété première des verres au gadolinium est d'être neutrophage.

On a mesuré, pour les verres selon l'invention, la valeur du coefficient d'absorption aux neutrons ($\mu$) :

Pour les neutrons rapides (énergie supérieure à 10 KeV), on a $\mu = 4,14$ cm$^{-1}$.

Pour les neutrons thermiques (énergie environ égale à 0,1 eV), on a $\mu = 760$ cm$^{-1}$.

On a testé les verres selon l'invention pour leur propriété neutrophage, en comparant l'intensité Io d'un flux de neutrons thermiques à l'intensité I du même flux après son passage à travers une plaque de verre d'épaisseur X.

Le rapport de ces intensités se formalise :

$$I/I_o = e^{-\mu x}$$

où x est l'épaisseur de la plaque et

$\mu$ le coefficient d'absorption aux neutrons.

Dans le cas des neutrons thermiques, les résultats sont présentés dans le tableau suivant

| x (mm) | $I/I_o$ |
|--------|---------|
| 1 | $10^{-33}$ |
| 0,1 | $10^{-4}$ |

Le fait d'associer l'azote aux verres au gadolinium améliore tant leurs caractéristiques chimiques que physiques. En effet, la présence d'azote dans les verres augmente à la fois les propriétés mécaniques et la résistance au milieu agressif ($HNO_3$ concentré par exemple). Ils présentent en outre, une résistance à la corrosion sèche ou humide exceptionnelle.

Par rapport aux autres composés du gadolinium, ces verres présentent de nombreux avantages dont on peut donner quelques exemples, sans que l'énumération soit exhaustive:

- homogénéité de répartition des atomes de gadolinium
- isotropie du milieu
- qualité des propriétés physiques et chimiques
- bonne aptitude à des mises sous formes très diverses, par exemple des films de revêtement
- bonne conservation (le composé ne s'amorphise pas).

On peut donc obtenir, par les méthodes usuelles, des objets de formes les plus diverses, destinés à intercepter ou canaliser des flux de neutrons.

## REVENDICATIONS

1. Verres neutrophages comprenant du silicium, de l'aluminium, de l'oxygène et/ou de l'azote, caractérisés en ce qu'ils contiennent en outre du gadolinium à raison d'environ 5 à 15% atomique.

2. Verres neutrophages selon la revendication 1, caractérisés par les compositions atomiques suivantes :

| | |
|---|---|
| Si | 9,5 à 20,2 % |
| Al | 5,6 à 16,0 % |
| O | 52,3 à 64,0 % |
| N | 0 à 10,0 % |
| Gd | 5,4 à 14,7 % |

3. Verres neutrophages selon la revendication 1 ou 2, caractérisés en ce que la teneur en gadolinium est de l'ordre de $10^{22}$ atomes de $Gd/cm^3$.

4. Procédé de préparation des verres, selon l'une des revendications 1 à 3, caractérisé en ce que l'on chauffe jusqu'à une température d'environ 1400°C un mélange pulvérulent comportant notamment de l'oxyde de silicium, de l'oxyde et/ou du nitrure d'aluminium et de l'oxyde de gadolinium dans des creusets métalliques, et que l'on refroidit pour obtenir la vitrification.

5. Procédé selon la revendication 4, caractérisé en ce que ledit mélange pulvérulent répond à la composition molaire suivante :

| | |
|---|---|
| $SiO_2$ | 40 à 72 % |
| $Al_2O_3$ | 10 à 35 % |
| $Gd_2O_3$ | 10 à 30 % |

6. Procédé selon la revendication 4, caractérisé en ce que ledit mélange pulvérulent répond à la composition molaire suivante :

| | |
|---|---|
| $SiO_2$ | 57 à 68 % |
| AlN | 17 à 28 % |
| $Gd_2O_3$ | 9 à 21 % |

7. Procédé selon l'une des revendications 4 à 6, caractérisé en ce que dans un four à haute fréquence, on fait monter la température à environ 1400°C en 5 minutes environ, on maintient cette température pendant environ 30 minutes et on refroidit pour obtenir la vitrification.

8. Procédé selon l'une des revendications 6 et 7, caractérisé en ce que l'on opère sous atmosphère contrôlée à base d'azote.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 614 185  (GESELLSCHAFT FÜR KERNFORSCHUNG) <br> * Revendications * <br><br> --- | 1,3 | C 03 C    3/11 <br> C 03 C    3/095 <br> G 21 F    1/06 |
| X | CHEMICAL ABSTRACS, vol. 98, no. 26, juin 1983, page 299, no. 220565b, Columbus, Ohio, US; J. LANG et al.: "The glassy phase in the lanthanide-silicon-aluminum-oxygen-nitrogen system" & MATER. SCI. MONOGR. 1982, 10(React. Solids,v2), 506-11 <br> * Résumé * <br><br> ----- | 1 | |

| DOMAINES TECHNIQUES RECHERCHES (Int. Cl.4) |
|---|
| C 03 C    3/00 <br> G 21 F    1/00 |

Le présent rapport de recherche a été établi pour toutes les revendications

| Lieu de la recherche | Date d'achèvement de la recherche | Examinateur |
|---|---|---|
| LA HAYE | 06-12-1985 | BOUTRUCHE J.P.E. |